# EUROPÄISCHE PATENTSCHRIFT

(11) **EP 0 983 176 B1**
(45) Veröffentlichungstag und Bekanntmachung des Hinweises auf die Patenterteilung: **10.10.2001**
(21) Anmeldenummer: 98928324.7
(22) Anmeldetag: 28.05.1998
(51) Int. Cl.: B60T 8/48

(54) **DRUCKMINDERUNGS- UND DÄMPFUNGSEINRICHTUNG FÜR KRAFTFAHRZEUGBREMSANLAGEN**
PRESSURE REDUCTION AND DAMPING DEVICE FOR A MOTOR VEHICLE BRAKING SYSTEM
DISPOSITIF DE REDUCTION DE PRESSION ET D'AMORTISSEMENT POUR INSTALLATIONS DE FREINAGE DE VEHICULES A MOTEUR

(30) Priorität: 28.05.1997 DE 19722550
(43) Veröffentlichungstag der Anmeldung: 08.03.2000
(73) Patentinhaber: Continental Teves AG & Co. oHG, 60488 Frankfurt am Main (DE)
(72) Erfinder: BURGDORF, Jochen, D-63075 Offenbach (DE); VOLZ, Peter, D-64291 Darmstadt (DE)
(86) Internationale Anmeldenummer: EP9803152
(87) Internationale Veröffentlichungsnummer: WO9854039

(56) Entgegenhaltungen:
- EP-A- 0 539 898
- WO-A-96/10506
- WO-A-97/06040
- WO-A-98/00323
- DE-A- 4 202 388
- DE-A- 4 205 041
- DE-A- 4 336 464
- DE-A- 4 425 578
- DE-A- 19 519 832
- PATENT ABSTRACTS OF JAPAN vol. 017, no. 377 (M-1446), 15. Juli 1993 -& JP 05 065057 A (SUMITOMO ELECTRIC IND LTD), 19. März 1993

## Beschreibung

Die Erfindung betrifft eine Druckminderungs- und Dämpfungseinrichtung für Kraftfahrzeugbremsanlagen gemäß dem Oberbegriff des Patentanspruchs 1.

Gemäß dem Stand der Technik sind ASMS(Automatisches Stabilitäts-Management-System)-Bremsanlagen bekannt, welche für eine Bremsdruckmodulation Magnetventile verwenden. Insbesondere können für jede Radbremse ein Einlaßventil und ein Auslaßventil vorgesehen sein. Die Einlaßventile sind hierbei beispielsweise stromlos offen und ermöglichen dadurch die normale Funktion der Betriebsbremsanlage. Die Auslaßventile sind stromlos geschlossen und verschließen damit den Rücklauf. Durch eine feinabgestimmte, getaktete Strombeaufschlagung der Ventile kann eine beinahe stufenlose Druckmodulation erfolgen.

Eine Kraftfahrzeugbremsanlage ist beispielsweise aus der DE 4 425 578 A1 bekannt. Diese Druckschrift zeigtein Verfahren zum Betreiben einer blockiergeschützten Kraftfahrzeugbremsanlage zur Fahrstabilitäts- und/oder Antriebsschlupfregelung, die einen unabhängig vom Fahrerwillen ansteuerbaren Bremskraftverstärker aufweist. Beim Eintritt in die Regelung wird ein Bremskraftverstärker unabhängig vom Fahrerwillen angesteuert, um ein Vorfüllen der Fahrzeugradbremsen zu erreichen, wobei nach Beendigung des Vorfüllvorgangs der weitere Druckaufbau in den Fahrzeugradbremsen mit einer sog. ABS-Rückförderpumpe erfolgt. Weiterhin wird beim Eintritt in jeden Fremdbremsvorgang während der Anlaufphase der Rückförderpumpe der Bremskraftverstärker unabhängig vom Fahrerwillen angesteuert, so daß die Radbremsen vorgefüllt werden. Für einen weiteren Druckaufbau wird dann ein Trennventil geschlossen und ein entsprechendes Schaltventil geöffnet. Dadurch erzeugt die Rückförderpumpe an einem Knotenpunkt einen hohen Druck, der es ermöglicht, durch Schalten der Ein- und Auslaßventile den gewünschten Fremdbremsdruck in den Radbremszylindern individuell einzustellen.

Aus der die Merkmale des Oberbegriffes des Anspruchs 1 aufweisenden EP 0 539 898 A1 ist ein Kontrollvorrichtung für eine Bremsflüssigkeit bekannt, die einen Druckspeicher aufweist, der mit einer gemeinsamen Niederdruckleitung und Saugleitung verbunden ist, wobei die Niederdruckleitung über ein Auslaßventil mit einer Radbremse verbunden ist und die Saugleitung zu der Saugseite der Pumpe führt. Eine Hochdruckleitung steht mit einem Hochdrucksteuerventil in dem Druckspeicher in Verbindung.
Dabei kann bei geöffnetem Auslaßventil und einer laufenden Pumpe die Kolben der Radbremse zurückgezogen werden.

Ein Problem des oben genannten Standes der Technik liegt darin, daß die Saugseite der Pumpe bei einem Fremdbremsvorgang mit einem sehr hohen Druck beaufschlagt wird, der von dem Hauptbremszylinder stammt. Dadurch entsteht beim Bremsen eine hohe Geräuschentwicklung. Weiterhin entstehen unerwünschte Schwingungen.

Die Aufgabe der Erfindung ist es, eine Druckminderungs- und Dämpfungseinrichtung für Kraftfahrzeugbremsanlagen zu schaffen, die kostengünstig eine wirksame Geräusch- und Schwingungsvermeidung der Pumpe realisiert und ein unbeabsichtigtes Lösen der Bremskolben.

Die Aufgabe wird gemäß den Merkmalen des unabhängigen Patentanspruchs gelöst. Die abhängigen Patentansprüche geben vorteilhafte Ausführungsformen und Weiterentwicklungen der Erfindung an.

Erfindungsgemäß weist die Druckminderungs- und Dämpfungseinrichtung einen Druckspeicher auf, der mit einer Niederdruckleitung und einer Saugleitung verbunden ist. Mit dem Druckspeicher steht weiterhin eine Hochdruckleitung in Verbindung. Erfindungsgemäß ist weiterhin in dem Druckspeicher ein Hochdrucksteuerventil vorgesehen, das mit der Hochdruckleitung verbunden ist und nach einer vorbestimmten Verfahrbewegung eines Kolbens des Druckspeichers denselben von der Hochdruckleitung abtrennt. Dadurch wird erreicht, daß in der Saugleitung ein gegenüber der Hochdruckleitung verminderter Druck ansteht. Dieser Druck wird überwiegend durch ein elastisches Element in dem Druckspeicher und dem Kolbendurchmesser bestimmt. Durch diese Druckminderung kann eine drastische Geräuschminderung der Pumpe erzielt werden, da beispielsweise der Kurbeltrieb der Pumpe nicht mehr so stark belastet wird und somit eine Geräuschminderung ermöglicht. Weiterhin kann natürlich auch die Lebensdauer der Pumpe und von sämtlichen mit dem verminderten Druck in Kontakt stehenden Bauteile erhöht werden. Darüber hinaus führt eine Druckverminderung zu der Möglichkeit, eventuell kostengünstigere Bauteile zu verbauen.

Neben dem Effekt der Druckabsenkung kann durch das Vorsehen des Hochdrucksteuerventils, des Kolbens und des elastischen Elements in dem Druckspeicher ebenso eine Dämpfungswirkung erzielt werden.

Vorteilhaft kann weiterhin in der Saugleitung ein zusätzliches Dämpfungselement vorgesehen sein. Dieses Dämpfungselement kann eine Membran aufweisen. Durch den Einsatz des Dämpfungselements kann an der Saugseite der Pumpe eine weitere starke Schwingungsdämpfung erzielt werden.
Weiterhin ist eine Kraftfahrzeugbremsanlage vorgesehen die die oben genannte Druckminderungs- und Dämpfungseinrichtung aufweist. Die Kraftfahrzeugbremsanlage kann hierbei über eine Steuereinheit derart angesteuert werden, daß eine Fahrstabilitäts-, eine Antriebsschlupf- und/oder eine Antiblockierregelung durchgeführt wird.

Bei bekannten automatischen Stabilitätsmanagementsystemen (ASMS) wird derzeit entweder mit einem aktiven Vakuumbooster oder mit einer zusätzlichen elektrisch angetriebenen Pumpe die ABS(Antiblockiersystem)-, ASR(Antischlupfregelung)- und/oder ASMS-Pumpe vorgeladen. Diese Vorladung führt bei den bekannten Systemen zu sehr starker Geräusch- und Schwingungsentwicklung in den Fahrzeugen. Mittels der oben genannten Lösung kann unter Verwendung eines bekannten Druckspeichers mit einem Steuerventil und gemäß einer Ausführungsform unter Verwendung eines Dämpfungselements in der Saugleitung der Pumpe eine starke Reduzierung der Pumpenbelastung erzielt werden. Weiterhin können dadurch Pulsationen, Geräusche und Schwingungen, die sonst durch den hohen Tandemhauptzylinderdruck in der Pumpe im Kurbeltrieb derselben hervorgerufen werden, drastisch reduziert werden.

Weitere Vorteile der Erfindung werden im folgenden anhand von schematischen Zeichnungen beispielhaft näher erläutert; es zeigen:
- Fig. 1: eine Ausführungsform eines erfindungsgemäßen Druckspeichers;
- Fig. 2: eine nicht beanspruchte Ausführungsform eines Druckspeichers nach dem Stand der Technik;
- Fig. 3: eine Kraftfahrzeugbremsanlage mit einem Druckspeicher gemäß der Ausführungsform der Erfindung und
- Fig. 4: eine Kraftfahrzeugbremsanlage mit einem Druckspeicher gemäß der nicht beanspruchten Ausführungsform der Figur 2.

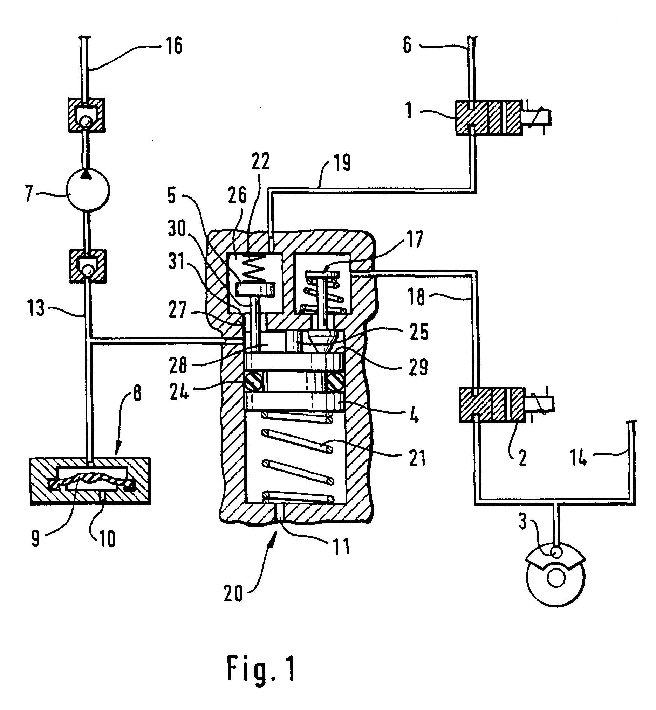

Die Fig. 1 zeigt einen Druckspeicher 20, der ein elastisches Element 21 und einen Kolben 4 aufweist. An dem Kolben 4 ist eine Dichtung 24 vorgesehen. Diese Dichtung kann bei spielsweise ein O-Ring sein. Durch das elastische Element 21, das beispielsweise eine Feder sein kann, wird der Kolben nach oben gegen einen Anschlag gedrückt, wenn kein Druck in den Druckspeicher eingebracht wird.

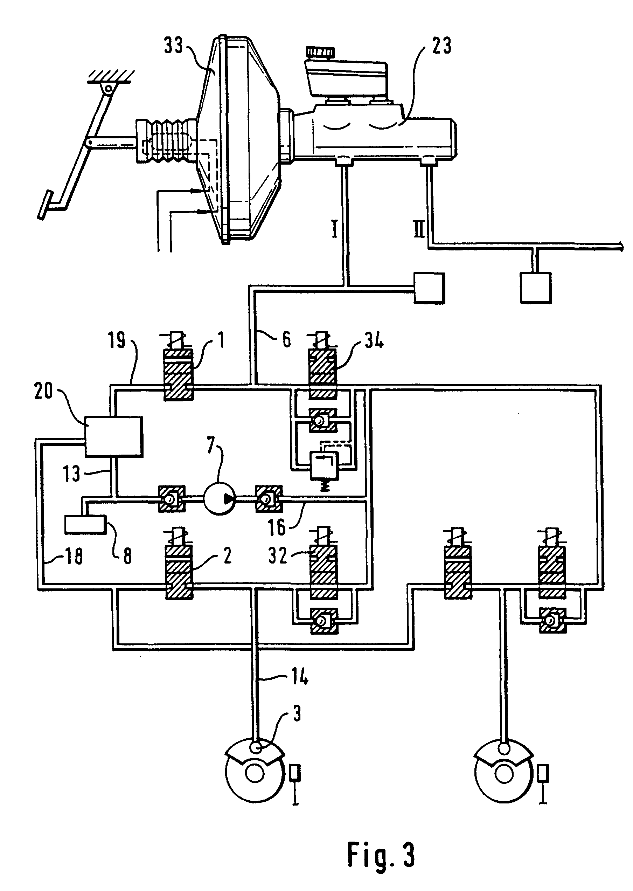

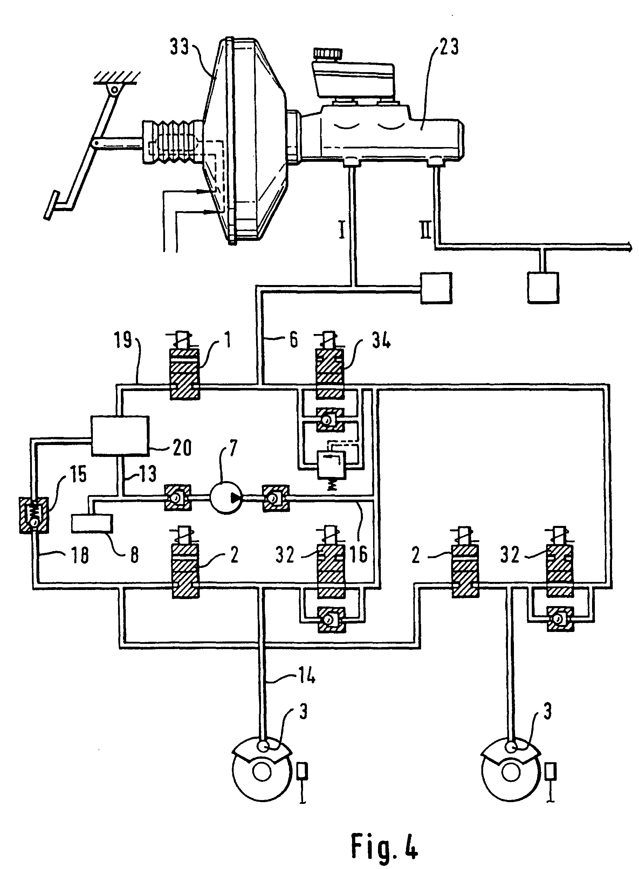

Im folgenden soll kurz die Funktionsweise des Druckspeichers 20 erläutert werden. Wird beispielsweise durch eine geeignete Steuereinheit über entsprechend vorgesehene Sensoren erkannt, daß eine Fremdbremsung notwendig ist, so wird ein Schaltventil 1 geöffnet, welches mit einer Bremszylinderleitung 6 in Verbindung steht. Somit wird der Bremszylinderdruck des beispielsweise aktiven Vakuumboosters (oder einer zusätzlich vorgesehenen elektrisch angetriebenen Pumpe) in eine Hochdruckleitung 19 eingebracht. Diese Hochdruckleitung 19 ist mit einer Steuerventilkammer 26 verbunden, wodurch der hohe Druck des in der Fig. 3 und 4 dargestellten Hauptzylinders 23 über eine Öffnung 27 in eine Druckspeicherkammer 28 eintreten kann. Dieser Druck wirkt nun auf eine obere Kolbenfläche 29 und verschiebt dadurch den Kolben 4 nach unten in der Fig. 1. An dieser Stelle sei angemerkt, daß die Verschiebungsrichtung natürlich von der Einbaulage des Druckspeichers 20 abhängt.

In der in der Fig. 1 dargestellten Anfangslage steht ein Ventilelement 30 an der oberen Kolbenfläche 29 an. Mittels einer Feder 22 wird das Ventilelement 30 gegen diese obere Kolbenfläche 29 gedrückt. Die Federkraft der Feder 22 ist jedoch geringer als die Federkraft des elastischen Elements 21, so daß ohne eine Druckbeaufschlagung die obere Kolbenfläche 29 an dem Anschlag 25 ansteht.

Wird nun, wie oben beschrieben, ein entsprechender Hochdruck in die Druckspeicherkammer 28 eingebracht, so bewegt sich der Kolben 4 nach unten und mit ihm das Ventilelement 30. Über die Druckkraft der Feder 22 wird das Ventilelement 30 ebenso nach unten bewegt, bis das Ventilelement 30 mit einem Ventilsitz 31 in Kontakt kommt. Dadurch schließt das Hochdrucksteuerventil 5. In einer Saugleitung 13, welche mit der Druckspeicherkammer 28 verbunden ist, steht nun ein relativ zur Bremszylinderleitung 6 verminderter Druck an. Dieser Druck wird überwiegend durch das elastische Element 21 und den Kolbendurchmesser des Kolbens 4 bestimmt.

Weiterhin ist an die Saugleitung 13 ein Dämpfungselement 8 angeschlossen. Das Dämpfungselement 8 weist eine Membran 9 und eine Belüftungsbohrung 10 auf. Durch den Einsatz des Dämpfungselements zusammen mit dem vorgenannten erfindungsgemäßen Druckspeicher 20 mit dem Hochdrucksteuerventil 5 kann eine drastische Geräusch- und Schwingungsreduzierung der Gesamtanlage erreicht werden.

Wenn während des Regelvorgangs Volumen durch ein Auslaßventil 2 in den Druckspeicher 20 strömt, so wird das Hochdrucksteuerventil 5 ebenso geschlossen, da sich, wie oben schon beschrieben, infolgedessen der Kolben 4 nach unten bewegt. Damit wird kein zusätzliches Volumen aus dem Bremshauptzylinder 23 über die Bremszylinderleitung 6 entnommen, was ebenfalls zu einer Geräuschreduzierung und Energieeinsparung führt. In der Regel ist dann auch das Schaltventil 1 geschlossen.

Weiterhin ist ein Niederdrucksteuerventil 17 vorgesehen, das mit einer Niederdruckleitung 18 in Verbindung steht. Das Niederdrucksteuerventil 17 verhindert, daß bei geöffnetem Auslaßventil 2 und einer laufenden Pumpe 7 die Kolben einer Radbremse 3 zurückgezogen werden.

An die Druckseite der Pumpe 7 ist weiterhin eine Pumpendruckleitung 16 angeschlossen, welche über ein in den Fig. 3 und 4 dargestelltes Einlaßventil 32 mit einer Einlaßleitung 14 in Verbindung steht, um den Pumpenförderdruck auf die Radbremse 3 zu übertragen.

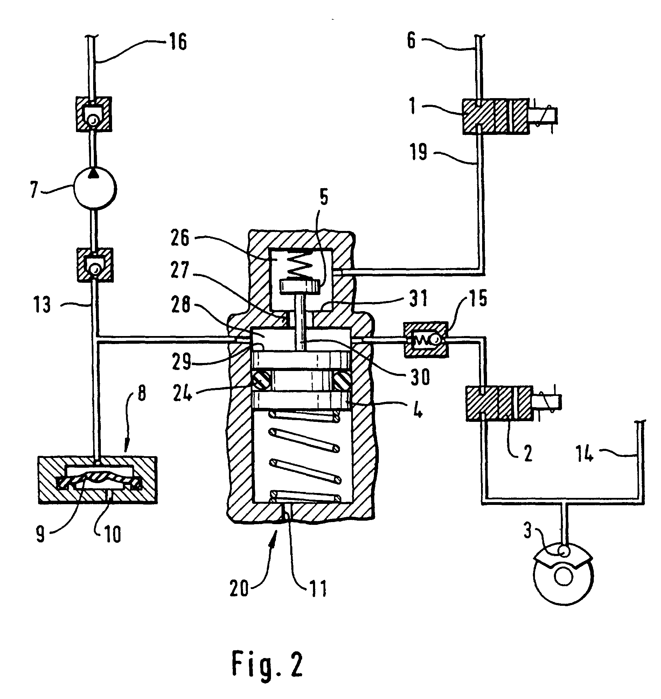

Die Fig. 2 zeigt eine nicht beanspruchte Ausführungsform, wobei auf eine Beschreibung von zur Fig. 1 identischen Bauteilen verzichtet wird. Im Unterschied zur ersten Ausführungsform der Erfindung ist in der Fig. 2 kein Niederdrucksteuerventil 17 vorgesehen, welches in den Druckspeicher 20 integriert ist. Identisch zur ersten Ausführungsform ist jedoch auch hier das Hochdrucksteuerventil 5 in den Druckspeicher 20 integriert. In die Niederdruckleitung 18 zwischen dem Auslaßventil 2 und dem Druckspeicher 20 ist ein Druckrückhalteventil 15 eingesetzt, welches eine zum Niederdrucksteuerventil 17 identische Funktion aufweist, so daß auf eine nähere Beschreibung ebenso verzichtet wird. Durch die Verwendung des Druckrückhalteventils 15 wird erreicht, daß während der Druckregelung in der Radbremse 3 ein gewünschter Restdruckwert eingestellt wird, der eine Rückstellbewegung des Kolbens der Radbremse 3 verhindert. Weiterhin weist der Druckspeicher 20 ebenso wie das Dämpfungselement 8 eine Belüftungsbohrung 11 auf, um eine Bewegung des Kolbens 4 zu ermöglichen.

Die Fig. 3 zeigt ein Beispiel einer aktiven Bremsanlage gemäß der Ausführungsform der Erfindung. Es sei an dieser Stelle darauf hingewiesen, daß die in der Fig. 3 dargestellte Bremsanlage nur schematisch und vereinfacht ein mögliches Beispiel einer derartigen Anlage darstellen soll. Es wird zudem auf eine Beschreibung von Bauteilen verzichtet, welche für die erfindungsgemäße Druckminderungs- und Dämpfungseinrichtung nicht bedeutsam sind.

Beim Eintritt in einen Fremdbremsvorgang wird beispielsweise während der Anlaufphase der Pumpe 7 ein Bremskraftverstärker 33 unabhängig vom Fahrerwillen angesteuert, so daß die Radbremsen 3 über die Bremszylinderleitung 6 im ersten (I) und im nicht weiter dargestellten zweiten (II) Bremskreis vorgefüllt werden. Für einen weiteren Druckaufbau wird ein Trennventil 34 geschlossen und das Schaltventil 1 geöffnet. Dadurch steht an dem Druckspeicher 20 ein Hochdruck aus dem Bremshauptzylinder 23 an. Dieser Druck wird, wie schon vorstehend beschrieben, durch den Druckspeicher 20 reduziert, wobei ebenso eine entsprechende Dämpfungswirkung von Pulsationen und Schwingungen erfolgt. Zusätzliche Dämpfungswirkung wird durch das saugseitig angeordnete Dämpfungselement 8 erzielt, welches an die Saugleitung 13 angeschlossen ist. Der Förderdruck der Pumpe 7 wird über die Pumpendruckleitung 16 zu dem Einlaßventil 32 geführt. Bei geöffnetem Einlaßventil 32 wird dieser Druck dann an die Radbremse 3 angelegt.

Die Niederdruckleitung 18 ist weiterhin mit dem Auslaßventil 2 und dem Druckspeicher 20 verbunden.

Die Fig. 4 zeigt im Unterschied zur Fig. 3 den Einbau der nicht beanspruchten Druckminderungs- und Dämpfungseinrichtung entsprechend der Figur 2. Hierbei ist in der Niederdruckleitung 18 das Druckrückhalteventil 15 angeordnet, da der Druckspeicher 20 kein integriertes Niederdrucksteuerventil 17 aufweist.

Abschließend sei angemerkt, daß die erfindungsgemäße Druckminderungs- und Dämpfungseinrichtung nicht auf aktive Bremsanlagen, wie Bremsanlagen mit einem Vakuumbooster oder mit einer zusätzlichen elektrisch angetriebenen Pumpe beschränkt sein soll, die eine ABS-, ASR- und/oder ASMS-Pumpe vorladen. Die Erfindung kann vielmehr auch für alle Einsatzgebiete verwendet werden, bei denen eine Schwingungs- und Geräuschdämpfung an der Saugseite von Fluidpumpen gewünscht wird und ein Zurückziehen der Kolben der Radbremsen vermieden werden soll.

## Patentansprüche

1. Druckminderungs- und Dämpfungseinrichtung für Kraftfahrzeugbremsanlagen, mit
- einem Druckspeicher (20), der einen Kolben (4) und ein elastisches Element (21) aufweist und mit einer Niederdruckleitung (18) und einer Saugleitung (13) verbunden ist, wobei
- die Niederdruckleitung (18) über ein Auslaßventil (2) mit einer Radbremse (3) verbunden ist und die Saugleitung (13) zu einer Saugseite einer Pumpe (7) führt,
- und mit einer Hochdruckleitung (19), die über ein Schaltventil (1) mit dem Druckspeicher (20) in Ver bindung steht, wobei ein Hochdrucksteuerventil (5) in dem Druckspeicher (20) vorgesehen ist, das mit der Hochdruckleitung (19) verbunden ist und nach einer vorbestimmten Verfahrbewegung der Kolben (4) den Druckspeicher (20) von der Hochdruckleitung (19) abtrennt,
**dadurch gekennzeichnet, daß**
der Druckspeicher (20) ein im Druckspeicher (20) integriertes Niederdrucksteuerventil (17) aufweist, welches die Niederdruckleitung (18) ab einem vorbestimmten Druck in der Niederdruckleitung (18) mit dem Druck speicher (20) verbindet.

2. Einrichtung nach Anspruch 1, **dadurch gekennzeichnet, daß** das Hochdrucksteuerventil (5) im geöffneten Zustand mit dem Kolben (4) in Kontakt steht und über eine Feder (22) in einem geschlossenen Zustand bewegt wird, wenn das Hochdrucksteuerventil (5) keinen Kontakt mit dem Kolben (4) aufweist.

3. Einrichtung nach Anspruch 1 oder 2, **dadurch gekennzeichnet, daß** die Saugleitung (13) mit einem Dämpfungselement (8) verbunden ist.

4. Einrichtung nach Anspruch 3, **dadurch gekennzeichnet, daß** das Dämpfungselement (8) eine Membran (9) aufweist.

5. Einrichtung nach zumindest einem der Ansprüche 1 bis 4, **dadurch gekennzeichnet, daß** das Schaltventil (1) über eine Anschlußleitung (6) mit einem Bremshauptzylinder (23) verbunden ist.

6. Kraftfahrzeugbremsanlage mit einer Einrichtung nach zumindest einem der Ansprüche 1 bis 5.

7. Kraftfahrzeugbremsanlage nach Anspruch 6, **dadurch gekennzeichnet, daß** mittels einer Steuereinheit eine Fahrstabilitäts-, Antriebsschlupf- und/oder Antiblockierregelung durchgeführt wird.

## Claims

1. Pressure-reducing and damping device for automotive vehicle brake systems, including
- a pressure accumulator (20) which has a piston (4) and an elastic element (21) and is connected to a low-pressure line (18) and a suction line (13), wherein
- the low-pressure line (18) is connected to a wheel brake (3) by way of an outlet valve (2) and the suction line (13) leads to a suction side of a pump (7), and including
- a high-pressure line (19) which is connected to the pressure accumulator (20) by way of a switching valve (1), a high-pressure control valve (5) being provided in the pressure accumulator (20) which is connected to the high-pressure line (19) and separates the pressure accumulator (20) from the high-pressure line (19) after a predetermined displacing movement of piston (4),
**chacterized in that** the pressure accumulator (20) has a low-pressure control valve (17) which is integrated in the pressure accumulator (20) and connects the low-pressure line (18) to the pressure accumulator (20) starting from a predetermined pressure in the low-pressure line (18).

2. Device as claimed in claim 1,
**characterized in that** the high-pressure control valve (5), in its opened condition, is in contact with the piston (4) and is moved to adopt its closed condition by way of a spring (22) when the high-pressure control valve (5) has no contact with the piston (4).

3. Device as claimed in claim 1 or 2,
**characterized in that** the suction line (13) is connected to a damping element (8).

4. Device as claimed in claim 3,
**characterized in that** the damping element (8) has a diaphragm (9).

5. Device as claimed in at least one of claims 1 to 4,
**characterized in that** the switching valve (1) is connected to a brake master cylinder (23) by way of a connecting line (6).

6. Automotive vehicle brake system with a device as claimed in at least one of claims 1 to 5.

7. Automotive vehicle brake system as claimed in claim 6,
**characterized in that** driving stability control, traction slip control, and/or anti-lock control is performed by way of a control unit.

## Revendications

1. Dispositif réducteur de pression et amortisseur pour systèmes de freinage pour véhicules automobiles, comprenant un accumulateur de pression (20) qui comporte un piston (4) et un élément élastique (21) et communique avec une conduite basse pression (18) et une conduite d'aspiration (13), dans lequel la conduite basse pression (18) est reliée à un frein de roue (3) par l'intermédiaire d'une vanne d'échappement (2), et la conduite d'aspiration (13) conduit au côté aspiration d'une pompe (7), et comprenant une conduite haute pression (19) qui communique avec l'accumulateur de pression (20) par l'intermédiaire d'une vanne de commutation (1), une vanne-pilote (5) de haute pression étant prévue dans l'accumulateur de pression (20), étant reliée à la conduite haute pression (19) et coupant l'accumulateur de pression (20) de la conduite haute pression (19) après une course prédéterminée du piston (4), **caractérisé en ce que** l'accumulateur de pression (20) comporte une vanne-pilote (17) de basse pression, qui est intégrée dans l'accumulateur de pression (20), et qui relie la conduite basse pression (18) à l'accumulateur de pression (20) à partir d'une pression prédéterminée régnant dans la conduite basse pression (18).

2. Dispositif selon la revendication 1, **caractérisé en ce qu'**à l'état ouvert, la vanne-pilote (5) de haute pression est en contact avec le piston (4), et est amenée en un état fermé par un ressort (22) lorsque la vanne-pilote (5) de haute pression n'a plus de contact avec le piston (4).

3. Dispositif selon la revendication 1 ou 2, **caractérisé en ce que** la conduite d'aspiration (13) est reliée à un élément amortisseur (8).

4. Dispositif selon la revendication 3, **caractérisé en ce que** l'élément amortisseur (8) comporte une membrane (9).

5. Dispositif selon l'une au moins des revendications 1 à 4, **caractérisé en ce que** la vanne de commutation (1) est reliée à un maître-cylindre de frein (23) par l'intermédiaire d'une conduite de raccordement (6).

6. Système de freinage pour véhicules automobiles, comportant un dispositif selon l'une au moins des revendications 1 à 5.

7. Système de freinage pour véhicules automobiles selon la revendication 6, **caractérisé en ce qu'**une régulation de stabilité de marche, une régulation de patinage à l'accélération et/ou une régulation d'antiblocage sont effectuées à l'aide d'une unité de commande.
